(19) **Europäisches Patentamt**
**European Patent Office**
**Office européen des brevets**

(11) **EP 2 515 586 B1**

(12) **EUROPEAN PATENT SPECIFICATION**

(45) Date of publication and mention
of the grant of the patent:
**14.05.2014 Bulletin 2014/20**

(51) Int Cl.:
**H04W 52/02** *(2009.01)*    **H04W 24/02** *(2009.01)*
**H04W 84/02** *(2009.01)*

(21) Application number: **11290193.9**

(22) Date of filing: **21.04.2011**

(54) **Method to control power consumption in a mobile network**

Verfahren zur Steuerung des Stromverbrauchs in einem mobilen Netzwerk

Method to control power consumption in a mobile network

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.10.2012 Bulletin 2012/43**

(73) Proprietors:
• **Alcatel Lucent**
**75007 Paris (FR)**
• **INRIA - Institut National de Recherche en
Informatique et en Automatique**
**78153 Le Chesnay Cedex (FR)**

(72) Inventors:
• **Chen, Chung Shue**
**Tokyo (HK)**
• **Baccelli, François**
**92190 Meudon (FR)**
• **Feki, Afef**
**91620 Nozay (FR)**
• **Roullet, Laurent**
**91620 Nozay (FR)**

(74) Representative: **Therias, Philippe
Alcatel-Lucent International
Intellectual Property Business Group
32, avenue Kléber
92700 Colombes (FR)**

(56) References cited:
**EP-A1- 2 282 602    WO-A1-2009/076979**

• TAO CAI ET AL: "Coverage and Capacity
Optimization in E-UTRAN Based on Central
Coordination and Distributed Gibbs Sampling",
2010 IEEE VEHICULAR TECHNOLOGY
CONFERENCE (VTC 2010-SPRING) - 16-19 MAY
2010 - TAIPEI, TAIWAN, IEEE, US, 16 May 2010
(2010-05-16), pages 1-5, XP031695890, ISBN:
978-1-4244-2518-1
• OLIVER BLUME ET AL: "Energy savings in
mobile networks based on adaptation to traffic
statistics", BELL LABS TECHNICAL JOURNAL,
WILEY, CA, US, vol. 15, no. 2, 1 September 2010
(2010-09-01), pages 77-94, XP001555947, ISSN:
1089-7089, DOI: 10.1002/BLTJ.20442
• ETOH M ET AL: "Energy Consumption Issues on
Mobile Network Systems", APPLICATIONS AND
THE INTERNET, 2008. SAINT 2008.
INTERNATIONAL SYMPOSIUM ON, IEEE,
PISCATAWAY, NJ, USA, 28 July 2008
(2008-07-28), pages 365-368, XP031310594, ISBN:
978-0-7695-3297-4

**Description**

## BACKGROUND OF THE INVENTION

The present invention relates to the field of telecommunications and more specifically of the power management in a mobile network comprising a plurality of network cells.

The fast rising of broadband wireless radio access in mobile networks leads to the deploying of an important amount of antennas, destined to cover wide areas in a pattern known as cells. The number of implied emitters/receivers represents a considerable power consumption that needs optimisation.

For example, future 4G wireless network architectures comprise the implementation of combined macro-cells, around respective wide range antennas, and small-cells, such as femto-cells, around respective short range antennas such as base-stations. When also considering the always rising mobility of the users, one can realize the complexity of the network architecture.

The known power consumption optimisation measures apply at three different levels: hardware level, traffic regulation at cell level, and optimisation at network level. The measures concerning hardware level can be for example the implementation of less power consuming components. The measures concerning traffic regulation at cell level are for example the caching of repeatedly transmitted data, overhead compression, or handing-off part of the load to other, less consuming, network resources. The optimisation at network level is done by optimising the cell pattern, and optimising the user attachment, that is the base-station the user equipments respectively bind to.

The optimisation at network level as now used implies important arrangements in hardware deployment (positioning the antennas), and/or use of a centralizing node, requiring change in the protocol stack and huge amounts of data exchange.

Document WO 2009/076979 discloses a method for power control optimization in a communication network based on the collecting of operational state information and the generation of power control recommendations using said information.

Document XP031695890 (Tao Cai et Al.), from the 2010 IEEE vehicular technology conference, discloses the use of Gibbs sampling for a set of network cells, to enhance the coverage of said cells.

Document EP 2282602 discloses a method and system to configure a radio network, using a hierarchic backhauling structure.

Document XP001555947 (Oliver Blume et Al.), from the Bell Labs Technical journal 2010, discloses the use of traffic burden forecasts to selectively shut down portions of the network nodes, in order to achieve energy savings.

## SUMMARY OF THE INVENTION

In order to overcome at least partially the aforementioned drawbacks, the invention has for object a method to control power consumption in a mobile network, wherein the network comprises a plurality of base-stations and user equipments, comprising the steps :

- computing a network state function for at least one user equipment taking into account neighbouring network elements of the at least one user equipment,
- computing a probability distribution for accessible network states using the state function, in which low power consumption network states are favoured,
- switching the state of the at least one user equipment to another state, according to the probability distribution.

By doing so, an easily implementable optimisation is proposed that does not require major modification of network structure or protocols. Moreover, the limited amount of data traffic and processing allows optimisation on time scales compatible with user mobility.

The method can also have one ore more of the following characteristics, taken separately or in combination.

The network state function is a local network state function, and the steps of computing the network state function for at least one user equipment taking into account neighbouring network elements of the at least one user equipment, and of computing a probability distribution for accessible network states using the state function, in which low power consumption network states are favoured, are performed by the local base stations.

The network state function is a global network function obtained by summing local network state functions, and the steps of computing the local network state function for at least one user equipment taking into account neighbouring network elements of the at least one user equipment, and of computing a probability distribution for accessible network states using the state function, in which low power consumption network states are favoured, are performed by the local base stations.

The steps are performed in an iterative process.

The network state function comprises a selfish part corresponding to the local link quality and an altruistic part corresponding to the interference induced on other network equipments.

It further comprises the step of exchanging data with the neighbouring network elements to determine the altruistic part.

The state function depends on the signal-to-interference-plus-noise ratio of the at least one user equipment.

The state function depends on the power consumption in the considered state of the at least one user equipment.

The probability distribution for the possible states further depends on a controlled parameter.

It comprises in addition a step of optimising an overall energy efficiency of the network using as a starting point the network state after switching the state of the at least one user equipment to another state, according to the probability distribution.

Another object of the invention is a network node in a mobile network, configured to :

- compute a network state function for at least one user equipment it is bound to, taking into account neighbouring network elements of the at least one user equipment,
- compute a probability distribution for accessible network states using the state function, in which low power consumption network states are favoured,
- cause the user equipment to switch state to another state, according to the probability distribution.

The network node can also have one or more of the following characteristics, taken separately or in combination.

It is further configured to exchange data with the neighbouring network elements to determine an altruistic part of the state function corresponding to the interference induced on other network equipments.

It is further configured to optimise an overall energy efficiency of the network using as a starting point the network state after switching the state of the at least one user equipment to another state, according to the probability distribution.

Finally, last object of the invention is the associated user equipment configured to :

- send connection state related data to allow computation of a network state function taking into account neighbouring network elements,
- switch state at random time interval into a state chosen according to a probability distribution for accessible network states using the state function, in which low power consumption network states are favoured.

Further characteristics of the invention will appear at the reading of the following description, describing by way of example different embodiments with reference to the accompanying drawings, in which :

- Fig. 1 represents schematically a mobile network portion,
- Fig. 2 represents schematically mobile network elements in a network neighbourhood,
- Fig. 3 represents schematically the steps of an embodiment of the method according to the invention.

In all figures the same references relate to the same elements.

## DETAILED DESCRIPTION OF THE INVENTION

The invention relates to a method to manage the power consumption in a mobile network, in particular to third and fourth generation wireless networks such as LTE network.

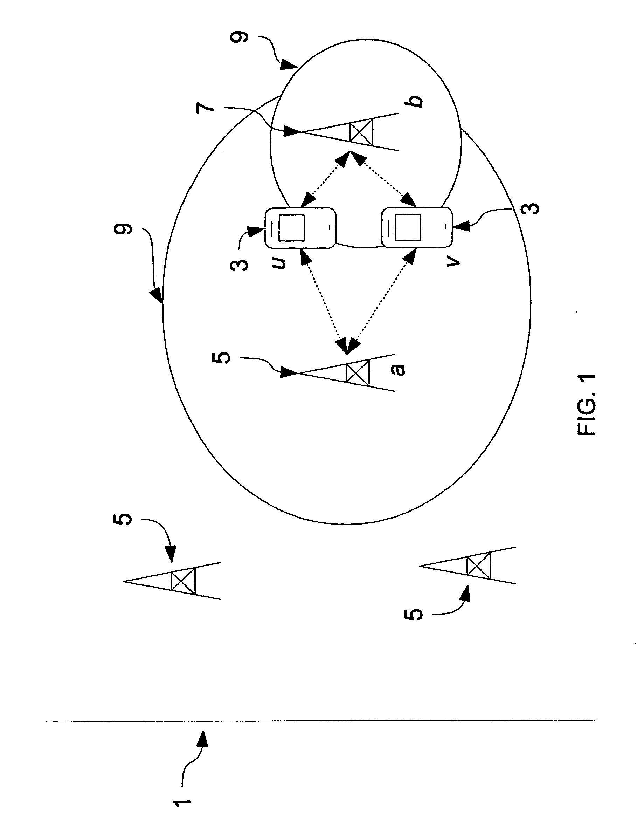

Figure 1 depicts a part 1 of a network, like a LTE network, comprising multiple network nodes such as but not limited to user equipments 3 and base stations 5, 7. The depicted network part 1 comprises two user equipments 3, labelled *u* and *v*, a macro-cell base station 5 labelled *a* and a micro-cell base station 7 labelled *b.* The user equipments 3 are for example smartphones, personal computers, digital pads, or any mobile network service compliant electronic equipment. The macro-cell base station 5 could be a usual LTE network cell base antenna, whereas the micro-cell 7 base station is for example a femto-cell base-station.

The base stations 5, 7 produce respective coverage areas 9, represented by circles, which correspond to the zone in which their signal is strong enough to ensure connectivity, and comprise the network cells associated to the considered base stations 5, 7.

The coverage zone 9 of micro-cell base station 7 is for its most part overlapping the coverage zone 9 of the macro-cell base station 5, which is larger. Both user equipments 3 are in the overlapping area, and can bind either with the macro-cell base station 5 or with the micro-cell base station 7. There are consequently at this point four possible states *s* for the system :

- *u* and *v* binding with *a,*
- *u* binding with *a* and *v* binding with *b,*
- *u* binding with *b* and *v* binding with *a,*
- *u* and *v* binding with *b.*

In a more realistic case, the fact that the user equipments 3 can switch between different channels *c* makes the states *s* even more numerous. But one can always define a finite number of states. In each state the power consumption and interference level between the user equipments 3 is different.

More particularly, one can define various state functions that are representative of global service quality and/or power consumption in the network 1. The function discussed herein is based on the signal-to-interference-plus-noise ratio (SINR) of user *u* and over the set of all users *U*. More precisely the global state function $\varepsilon$ is :

$$\mathcal{E} = \sum_{u \in \mathcal{U}} \frac{1}{\mathrm{SINR}_u}$$

which is the sum over all users *u* in the set of all users *U* of the inverted SINR of user *u*. By minimising $\varepsilon$ a good service quality is ensured. Since the user equipments 3 usually increase their emission power to counter bad SINR, a reduction of power consumption can be expected.

Even though this state function is not expressed in an energy unit, we call $\varepsilon$ the "energy" of the system "network" 1, to develop a statistical physics image.

The global energy state function $\varepsilon$ can be written as a sum over all users of a local energy $\varepsilon_u$ :

$$\varepsilon = k \sum_{u \in U} \varepsilon_u \,,$$

where *k* is a multiplicative constant, and :

$$\varepsilon_u = A_u + B_u$$

which is called the local energy at user *u* level, and :

$$A_u = \frac{N_u + \sum_{v \neq u} \sum_{c \in C_v} \alpha(v,u,c) P_v(c) l(b_v,u,c)}{\sum_{c \in C_u} P_u(c) l(b_u,u,c)} = \frac{1}{SINR_u} \quad \text{and} \quad B_u = \sum_{v \neq u} \left( \frac{\sum_{c \in C_u} \alpha(u,v,c) P_u(c) l(b_u,v,c)}{\sum_{c \in C_v} P_v(c) l(b_v,v,c)} \right)$$

We specify the above notations and explain them below in terms of downlink, however, note that the work is applicable to the uplink as well :

- $N_u$ denotes the receiver noise at *u,*
- $b_u$ is the antenna or base station 5, 7 that user *u* attaches to,
- $P_u(c)$ denotes the transmit power used to send the signal destined to *u* in channel $c \in C_u$, where $C_u$ is the set of channels (e.g. sub-carriers) used for the transmission,
- $l(b_u,u,c)$ is the signal attenuation from $b_u$ to u in channel *c*, and
- $\alpha(v,u,c)$ represents the orthogonality factor on the transmission destined to $v \in U$, $v \neq u$, with respect to channel *c*.

The component $A_u$ is called the "selfish" part of the local energy. It corresponds to the signal-to-interference-plus-noise ratio $SINR_u$ at single user *u* level. The presence of this component ensures that the optimisation process does not simply lead to switch off the user equipments 3 and antennas or base-stations 5, 7. Also, the fact that network elements tend to raise signal power to counter bad signal-to-interference-plus-noise ratio makes optimisation of this term useful.

The component $B_u$ is called the "altruistic" part of the local energy. It corresponds to the interference induced on all neighbouring network elements v by the considered user equipment *u*. Minimising this term allows all neighbouring network elements to lower their power consumption in turn.

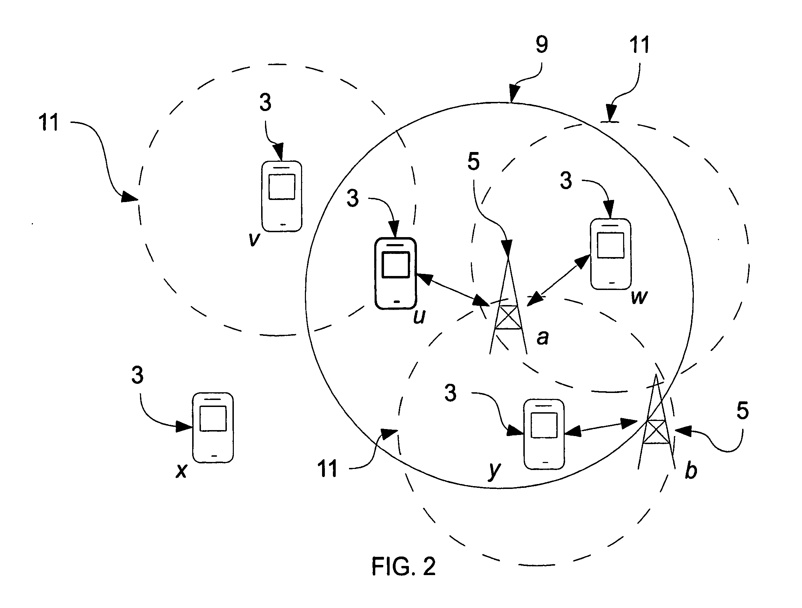

In figure 2 are depicted user equipments 3, labelled *u* to *y,* and two base stations 5, labelled *a* and *b*. The figure 2 illustrates the concept of neighbourhood, in which the user equipments previously denoted v are to be considered in previous formulas.

The reference user equipment will be user equipment u, drawn highlighted towards the others, and situated in the coverage area 9 of base station *a*. User equipments *v* and w represent the two type of neighbours that are considered. An interference area 11 of user equipment *v* is represented by a dotted circle around said user equipment *v*. In said area 11, the signal emitted by user equipment *v* is significantly high. To determine the area in practice, a threshold can be set above which the emitting user equipment will be considered a neighbour, and be involved in the computing of $\varepsilon_u$.

User equipment *w* is far enough from reference user equipment u to produce no interference with *u*, meaning for example that the signal from *w* is received at *u* at a power level under the threshold. Nevertheless, user equipment *w* shares base station *a* with user equipment *u*, so that it has to be considered while computing $\varepsilon_u$.

User equipment *x* is out of the coverage area 9 of the base station *a,* and far enough from user equipment *u* so that it is obviously not a neighbour of user equipment *u.*

User equipment *y* is still in the coverage area 9 of base station *a*, but is bound to base station *b* and far enough not to interfere directly with user equipment *u.*

Also, all the base stations or antennas *a, b* emitting a signal that is received by user equipment *u* above a threshold are neighbours that are to be considered.

To minimise the global system energy function $\varepsilon$, the individual, local components $\varepsilon_u$ need to be minimised. As shown before, the $\varepsilon_u$ components can be minimised using only immediate neighbour related data. This means that the $\varepsilon_u$ can be computed and minimised at antenna or base-station 5, 7 level, requiring only very limited data centralization and overhead traffic.

The neighbour to neighbour interferences make it impossible to compute an exact solution without considering the whole network. This would imply centralising the aforementioned data, computing the energy $\varepsilon_u$ and attribute states to all users. This is not possible considering the amount of traffic and computation it represents.

In the present example the receiver noise $N_u$, the received interference per channel *c,* and pathloss or link gain *l(b, u,c)* are measured by user equipment *u* itself, and then reported to local antenna or base-station 5, 7 to evaluate $A_u$. The power of the received signal from a user *v* and pathloss or link gain at neighbour *v* and/or neighbouring antenna or base station are measured and sent to the antenna or base station 5, 7.

Then, a heuristic approach, using a process called Gibbs sampling is used. In this Gibbs sampling variant, the base station 5, 7 computes for user *u* the local energy $\varepsilon_u$ after collecting the necessary data from the detected neighbours.

For user equipment *u,* a probability distribution or probability rule is determined using the local energy $\varepsilon_u$, for the attainable states *s,* having a higher value for states s with low energy $\varepsilon_u$. In the present embodiment, the chosen formula is :

$$\pi_u(\mathbf{s}) = c \cdot \exp(-\varepsilon_u(\mathbf{s})/T)$$

Where *c* is a normalisation constant and *T,* called the temperature, is a controlled parameter, used to influence the converging of the process. This distribution is derived from the Boltzmann distribution.

At regular or random time interval, the user equipment *u* switches its state to another state, using the aforementioned probability law. The new $\varepsilon_u$ is then computed, and with the new $\varepsilon_u$ the new probability law is determined, then the system waits for the next timer expiration to elapse, and the loop starts again. Since lower energy states have a higher probability, after a certain number of iterations, the user equipments will have switched to lower energy states.

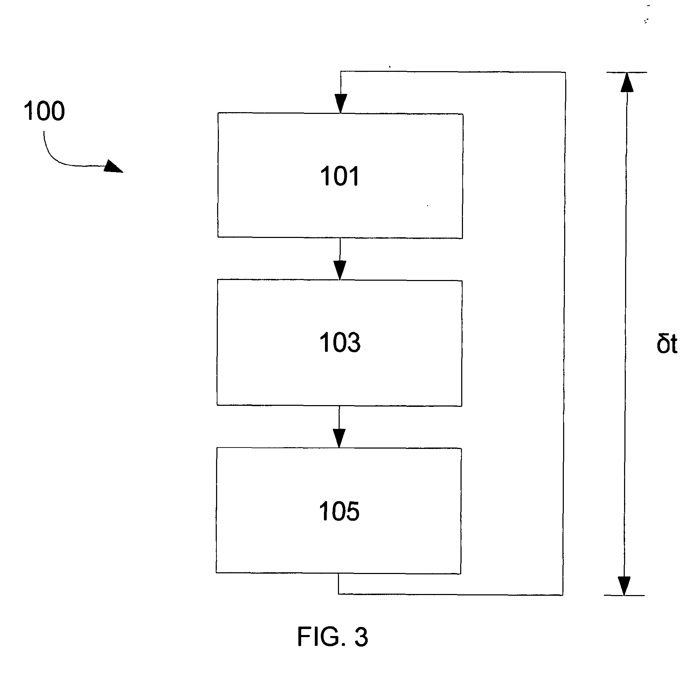

Figure 3 represents schematically the steps of the loop 100. In first step 101 the state of user equipment *u* is changed. In step 103 the user equipments 3 proceed to data exchange with the local antenna or base-station 5, 7. In step 105, the new $\varepsilon_u$ and corresponding probability law are determined. The system then starts again at step 101 after waiting for a certain, potentially random time interval $\delta$t.

If computation power allows, conditions can be set to exit loop 100 when a convergence of the resulting power consumption is detected. However, the high mobility of the user equipments 3, or more generally the network coherence time, may not permit convergence in a time short enough, in that case a predetermined number of iterations will be set after which the process exits loop 100.

The temperature *T* is used to control the convergence speed. A low temperature means that the system will converge quickly, but the obtained state may not be an optimal equilibrium.

One can consider that at each iteration the next level of neighbourhood is taken in consideration for any user *u.* As a matter of fact, after the second iteration a user equipment *u* optimises itself with its immediate neighbours, who in their turn optimised themselves taking into account their neighbours in the previous iteration.

Also, with a higher temperature, the network will have a higher degree of freedom, since a higher energy state, that will only be adopted at high temperature, for one single user equipment *u* may allow many other user equipments *v* to lower their energy in turn, leading to an overall power saving.

Therefore, by setting a higher temperature *T,* the expected number of iterations before converging is higher, but a better equilibrium should be reached.

As an alternative a time dependant temperature, in particular a temperature decreasing with time allows to combine the advantages of both high and low temperature case.

Alternative embodiments can be deployed based on a different global system energy function.

For example, one possibility is to include the power consumption $P_u$ of user *u* directly in the system energy function. For example, one may work on the function :

$$\varepsilon = \sum_{u \in U} P_u \times \sum_{u \in U} \frac{1}{SINR_u}$$

Another possibility is to perform a two-step optimisation. In a first step the following function will be optimised. :

$$\varepsilon = \sum_{u \in U} \frac{1}{SINR_u}$$

This means that one only takes into account the traffic optimisation in this first step.

This yields a certain overall energy efficiency that can for example be either defined as :

$$\text{Energy\_efficiency} = \sum_{u \in U} r_u \bigg/ \sum_{u \in U} P_u$$

or as :

$$\text{Energy\_efficiency} = \sum_{u \in U} \frac{r_u}{P_u}$$

where $r_u = K \log (1 + SINR_u)$, with *K* a positive multiplicative constant.

The above second definition will focus the attention on the energy efficiency in each transmission link but may sacrifice the optimality of the overall performance.

After optimising the state function, a transmit power vector **P*** is obtained, where $\mathbf{P^*} = \left\{ P_u^*, u \in U \right\}$.

The second step of the method will then be to search a scaling factor $\alpha$ to minimise the function :

$$\frac{\sum_{u \in U} r_u (\alpha \mathbf{P^*})}{\sum_{u \in U} \alpha P_u^*}$$

The user equipments are then configured to work at a power level of $\alpha P_u^*$.

A more general problem can be expressed as optimising following function :

$$\frac{\sum_{u \in U} r_u\left(\alpha P^*\right)}{\sum_{u \in U} \alpha_u P_u^*} \; ,$$

where $\alpha = \{\alpha_u\}$, subject to a given power constraint taking into account the hardware boundaries such as transmit power limit. Various additional constraints can be for example:

- $\forall BS_i, \sum_{u \in BS_i} \alpha_u P_u^* \leq P_{BS_i}$ , meaning that the sum of transmit powers in the downlink

from a base station $BS_i$ to its users is limited to the maximum value $P_{BS_i}$ corresponding to base-station maximum

power,

- $\forall u \in BS_i, \alpha_u = \alpha_{BS_i}$ , meaning that each base station has its own requirement to be applied to its users uniformly so that no individual user is underprivileged,

- possibility of $\alpha_{u \in BS_i} = 0$ , meaning that the base station is simply shut down and its users are attached to other base stations.

Also, it is possible to centralize on an intermediate level the local energy value $\varepsilon$ or $\varepsilon_u$ computed at base station 5, 7 level. Said centralization can take place over a network portion, reaching over, for example a dozen of base stations 5, 7, and be performed by a backhauling network node.

Simulations show that parallel improvements both in term of throughput quality and power consumption can be expected. This method, since it is distributed among the network, does not require important modifications, neither in the network architecture nor in the protocol stack.

Moreover, as it relies on statistics, its efficiency is improved with rising number of users, while the absence of overall centralising node means that no hardware limits the upper boundaries of user equipment population in a network using the method.

The method consequently allows to improve network quality while allowing a better environmental sustainability of the networks.

**Claims**

1. Method to control power consumption in a mobile network (1), wherein the network comprises a plurality of base-stations (5, 7) and user equipments (3), comprising the steps :

   - computing a network state function ($\varepsilon$, $\varepsilon_u$) for at least one user equipment ($u$) taking into account neighbouring network elements ($v,w$) of the at least one user equipment ($u$),
   - computing a probability distribution for accessible network states using the state function ($\varepsilon$, $\varepsilon_u$), in which low power consumption network states are favoured,
   - switching the state of the at least one user equipment ($u$) to another state, according to the probability distribution.

2. Method according to claim 1, wherein the network state function ($\varepsilon$, $\varepsilon_u$) is a local network state function ($\varepsilon_u$), and the steps of computing the local network state function ($\varepsilon_u$) for at least one user equipment ($u$) taking into account neighbouring network elements ($v,w$) of the at least one user equipment ($u$), and of computing a probability distribution for accessible network states using the local state function ($\varepsilon_u$), in which low power consumption network states are favoured, are performed by the local base stations (5, 7).

3. Method according to claim 1, wherein the network state function ($\varepsilon$, $\varepsilon_u$) is a global state function ($\varepsilon$) obtained by

summing local network state functions ($\varepsilon_u$), and the steps of computing the local network state function ($\varepsilon_u$) for at least one user equipment ($u$) taking into account neighbouring network elements ($v,w$) of the at least one user equipment ($u$), and of computing a probability distribution for accessible network states using the global state function ($\varepsilon$), in which low power consumption network states are favoured, are performed by the local base stations (5, 7).

4.  Method according to claim 1, 2 or 3, wherein the steps are performed in an iterative process.

5.  Method according to any of claims 1 to 4, wherein the network state function comprises a selfish part corresponding to the local link quality and an altruistic part corresponding to the interference induced on other network equipments (3).

6.  Method according to claim 5, further comprising the step of exchanging data with the neighbouring network elements ($v, w$) to determine the altruistic part.

7.  Method according to any of the precedent claims wherein the state function ($\varepsilon, \varepsilon_u$) depends on the signal-to-interference-plus-noise ratio of the at least one user equipment ($u$).

8.  Method according to any of the precedent claims, wherein the state function ($\varepsilon, \varepsilon_u$) depends on the power consumption in the considered state of the at least one user equipment ($u$).

9.  Method according to any of the precedent claims, wherein the probability distribution for the possible states further depends on a controlled parameter.

10. Network node in a mobile network, configured to :

    - compute a network state function ($\varepsilon, \varepsilon_u$) for at least one user equipment ($u$) it is bound to, taking into account neighbouring network elements of the at least one user equipment ($u$),
    - compute a probability distribution for accessible network states using the state function ($\varepsilon, \varepsilon_u$), in which low power consumption network states are favoured,
    - cause the user equipment ($u$) to switch state to another state, according to the probability distribution.

11. Network node according to claim 10, further configured to exchange data with the neighbouring network elements ($v, w$) to determine an altruistic part of the state function ($\varepsilon, \varepsilon_u$) corresponding to the interference induced on other network equipments.

12. User equipment in a mobile network, configured to :

    - send connection state related data to allow computation of a network state function ($\varepsilon, \varepsilon_u$) taking into account neighbouring network elements,
    - switch state at random time interval into a state chosen according to a probability distribution for accessible network states using the state function ($\varepsilon, \varepsilon_u$), in which low power consumption network states are favoured.

**Patentansprüche**

1.  Verfahren zur Steuerung der Leistungsaufnahme in einem mobilen Netzwerk (1), wobei das Netzwerk eine Vielzahl von Basisstationen (5, 7) und Benutzerendgeräten (3) einschließt, die folgenden Schritte umfassend:

    - Berechnen einer Netzwerkzustandsfunktion ($\varepsilon, \varepsilon_u$) für mindestens ein Benutzerendgerät ($u$) unter Berücksichtigung von benachbarten Netzwerkelementen ($v, w$) des mindestens einen Benutzerendgeräts ($u$),
    - Berechnen einer Wahrscheinlichkeitsverteilung für zugängliche Netzwerkzustände unter Verwendung der Zustandsfunktion ($\varepsilon, \varepsilon_u$), wobei Netzwerkzustände mit niedriger Leistungsaufnahme bevorzugt werden,
    - Umschalten des Zustands des mindestens einen Benutzerendgeräts ($u$) in einen anderen Zustand gemäß der Wahrscheinlichkeitsverteilung.

2.  Verfahren nach Anspruch 1, wobei die Netzwerkzustandsfunktion ($\varepsilon, \varepsilon_u$) eine lokale Netzwerkzustandsfunktion ($\varepsilon_u$) ist und die Schritte des Berechnens der lokalen Netzwerkzustandsfunktion ($\varepsilon_u$) für mindestens ein Benutzerendgerät ($u$) unter Berücksichtigung von benachbarten Netzwerkelemente ($v, w$) des mindestens einen Benutzerendgeräts (*u*) und des Berechnens einer Wahrscheinlichkeitsverteilung für zugängliche Netzwerkzustände unter Verwendung der lokalen Zustandsfunktion ($\varepsilon_u$), wobei Netzwerkzustände mit niedriger Leistungsaufnahme bevorzugt werden, von den lokalen Basisstationen (5, 7) durchgeführt werden.

3. Verfahren nach Anspruch 1, wobei die Netzwerkzustandsfunktion ($\varepsilon$, $\varepsilon_u$) eine durch Summieren der lokalen Netzwerkfunktionen ($\varepsilon_u$) erhaltene globale Netzwerkzustandsfunktion ($\varepsilon$) ist und die Schritte des Berechnens der lokalen Netzwerkzustandsfunktion ($\varepsilon_u$) für mindestens ein Benutzerendgerät (*u*) unter Berücksichtigung von benachbarten Netzwerkelemente (*v, w*) des mindestens einen Benutzerendgeräts (*u*) und des Berechnens einer Wahrscheinlichkeitsverteilung für zugängliche Netzwerkzustände unter Verwendung der globalen Zustandsfunktion ($\varepsilon$), wobei Netzwerkzustände mit niedriger Leistungsaufnahme bevorzugt werden, von den lokalen Basisstationen (5, 7) durchgeführt werden.

4. Verfahren nach Anspruch 1, 2 oder 3, wobei die Schritte in einem iterativen Prozess durchgeführt werden.

5. Verfahren nach einem beliebigen der Ansprüche 1 bis 4, wobei die Netzwerkzustandsfunktion einen eigennützigen Teil, welcher der lokalen Verbindungsqualität entspricht, und einen altruistischen Teil, welcher der auf den anderen Netzwerkgeräten (3) verursachten Interferenz entspricht, umfasst.

6. Verfahren nach Anspruch 5, weiterhin umfassend den Schritt des Austauschens von Daten mit den benachbarten Netzwerkelementen (*v, w*), um den altruistischen Teil zu ermitteln.

7. Verfahren nach einem beliebigen der vorstehenden Ansprüche, wobei die Zustandsfunktion ($\varepsilon$, $\varepsilon_u$) von dem Signal-zu-Interferenz-plus-Rausch-Verhältnis des mindestens einen Benutzerendgeräts (*u*) abhängt.

8. Verfahren nach einem beliebigen der vorstehenden Ansprüche, wobei die Zustandsfunktion ($\varepsilon$, $\varepsilon_u$) von der Leistungsaufnahme in dem in Betracht gezogenen Zustand des mindestens einen Benutzerendgeräts (*u*) abhängt.

9. Verfahren nach einem beliebigen der vorstehenden Ansprüche, wobei die Wahrscheinlichkeitsverteilung für die möglichen Zustände weiterhin von einem gesteuerten Parameter abhängt.

10. Netzwerkknoten in einem mobilen Netzwerk, konfiguriert für

- das Berechnen einer Netzwerkzustandsfunktion ($\varepsilon$, $\varepsilon_u$) für mindestens ein Benutzerendgerät (*u*), mit welchem sie verbunden ist, unter Berücksichtigung von benachbarten Netzwerkelementen des mindestens einen Benutzerendgeräts (*u*),
- das Berechnen einer Wahrscheinlichkeitsverteilung für zugängliche Netzwerkzustände unter Verwendung der Zustandsfunktion ($\varepsilon$, $\varepsilon_u$), wobei Netzwerkzustände mit niedriger Leistungsaufnahme bevorzugt werden,
- das Bewirken, dass das Benutzerendgerät (*u*) gemäß der Wahrscheinlichkeitsverteilung in einen anderen Zustand umschaltet.

11. Netzwerkknoten nach Anspruch 10, weiterhin konfiguriert für das Austauschen von Daten mit den benachbarten Netzwerkelementen (*v, w*), um einen altruistischen Teil der Zustandsfunktion ($\varepsilon$, $\varepsilon_u$), welcher der auf den anderen Netzwerkvorrichtungen verursachten Interferenz entspricht, zu ermitteln.

12. Benutzerendgerät in einem mobilen Netzwerk, konfiguriert für das

- Senden von verbindungszustandsbezogenen Daten, um die Berechnung einer Netzwerkzustandsfunktion ($\varepsilon$, $\varepsilon_u$) unter Berücksichtigung von benachbarten Netzwerkelementen zu ermöglichen,
- Umschalten des Zustands zu einem Zufallszeitintervall in einen gemäß einer Wahrscheinlichkeitsverteilung für zugängliche Netzwerkzustände ausgewählten Zustand unter Verwendung der Zustandsfunktion ($\varepsilon$, $\varepsilon_u$), wobei Netzwerkzustände mit niedriger Leistungsaufnahme bevorzugt werden.

**Revendications**

1. Procédé pour réguler la consommation de puissance dans un réseau mobile (1), dans lequel le réseau comprend une pluralité de stations de base (5, 7) et d'équipements utilisateur (3), comprenant les étapes suivantes

- calculer une fonction d'état de réseau ($\varepsilon$, $\varepsilon_u$) pour au moins un équipement utilisateur ($u$) en prenant en compte des éléments de réseau voisins ($v$, $w$) de l'au moins un équipement utilisateur ($u$),
- calculer une distribution de probabilité pour des états de réseau accessibles en utilisant la fonction d'état ($\varepsilon$, $\varepsilon_u$), les états de réseau à faible consommation de puissance étant privilégiés,
- commuter de l'état de l'au moins un équipement utilisateur ($u$) à un autre état, conformément à la distribution de probabilité.

2. Procédé selon la revendication 1, dans lequel la fonction d'état de réseau ($\varepsilon$, $\varepsilon_u$) est une fonction d'état de réseau locale ($\varepsilon_u$), et les étapes de calcul de la fonction d'état de réseau locale ($\varepsilon_u$) pour au moins un équipement utilisateur ($u$) en prenant en compte des éléments de réseau voisins ($v$, $w$) de l'au moins un équipement utilisateur ($u$), et de calcul d'une distribution de probabilité pour des états de réseau accessibles en utilisant la fonction d'état locale ($\varepsilon_u$), les états de réseau à faible consommation de puissance étant privilégiés, sont exécutées par les stations de base locales (5, 7).

3. Procédé selon la revendication 1, dans lequel la fonction d'état de réseau ($\varepsilon$, $\varepsilon_u$) est une fonction d'état globale ($\varepsilon$) obtenue en additionnant des fonctions d'état de réseau locales ($\varepsilon_u$), et les étapes de calcul de la fonction d'état de réseau locale ($\varepsilon_u$) pour au moins un équipement utilisateur ($u$) en prenant en compte des éléments de réseau voisins ($v$, $w$) de l'au moins un équipement utilisateur ($u$), et de calcul d'une distribution de probabilité pour des états de réseau accessibles en utilisant la fonction d'état globale ($\varepsilon$), les états de réseau à faible consommation de puissance étant privilégiés, sont exécutées par les stations de base locales (5, 7).

4. Procédé selon la revendication 1, 2 ou 3, dans lequel les étapes sont exécutées dans un processus itératif.

5. Procédé selon l'une quelconque des revendications 1 à 4, dans lequel la fonction d'état de réseau comprend une partie égoïste correspondant à la qualité de lien local et une partie altruiste correspondant à des interférences induites sur d'autres équipements de réseau (3).

6. Procédé selon la revendication 5, comprenant en outre l'étape d'échanges de données avec les éléments de réseau voisins ($v$, $w$) pour déterminer la partie altruiste.

7. Procédé selon l'une quelconque des revendications précédentes dans lequel la fonction d'état ($\varepsilon$, $\varepsilon_u$) dépend du rapport signal sur interférence plus bruit de l'au moins un équipement utilisateur ($u$).

8. Procédé selon l'une quelconque des revendications précédentes, dans lequel la fonction d'état ($\varepsilon$, $\varepsilon_u$) dépend de la consommation de puissance dans l'état considéré de l'au moins un équipement utilisateur ($u$).

9. Procédé selon l'une quelconque des revendications précédentes, dans lequel la distribution de probabilité pour les états possibles dépend en outre d'un paramètre commandé.

10. Noeud de réseau dans un réseau mobile, configuré pour

- calculer une fonction d'état de réseau ($\varepsilon$, $\varepsilon_u$) pour au moins un équipement utilisateur ($u$) auquel elle est liée, en prenant en compte des éléments de réseau voisins de l'au moins un équipement utilisateur ($u$),
- calculer une distribution de probabilité pour des états de réseau accessibles en utilisant la fonction d'état ($\varepsilon$, $\varepsilon_u$), les états de réseau à faible consommation de puissance étant privilégiés,
- entraîner la commutation de l'équipement utilisateur ($u$) d'un état à un autre, conformément à la distribution de probabilité.

11. Noeud de réseau selon la revendication 10, configuré en outre pour échanger des données avec les éléments de réseau voisins ($v$, $w$) pour déterminer une partie altruiste de la fonction d'état ($\varepsilon$, $\varepsilon_u$) correspondant aux interférences induites sur d'autres équipements de réseau.

12. Équipement utilisateur dans un réseau mobile, configuré pour

- envoyer des données relatives à l'état de connexion pour permettre le calcul d'une fonction d'état de réseau ($\varepsilon$, $\varepsilon_u$) en prenant en compte des éléments de réseau voisins,
- commuter d'un état à intervalle temporaire aléatoire à un état sélectionné conformément à une distribution de probabilité pour des états de réseau accessibles en utilisant la fonction d'état ($\varepsilon$, $\varepsilon_u$), les états de réseau à faible consommation de puissance étant privilégiés.

FIG. 1

FIG. 2

EP 2 515 586 B1

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009076979 A

- EP 2282602 A

**Non-patent literature cited in the description**

- **OLIVER BLUME et al.** *Bell Labs Technical journal,* 2010